(19) Europäisches Patentamt / European Patent Office / Office européen des brevets

(11) **EP 4 132 885 B1**

(12) **EUROPEAN PATENT SPECIFICATION**

(45) Date of publication and mention
of the grant of the patent:
**03.01.2024   Bulletin 2024/01**

(21) Application number: **21715290.9**

(22) Date of filing: **01.04.2021**

(51) International Patent Classification (IPC):
*C01G 53/00* (2006.01)       *C01G 53/04* (2006.01)
*H01M 4/00* (2006.01)

(52) Cooperative Patent Classification (CPC):
**C01G 53/42; C01G 53/04; H01M 4/505;
H01M 4/525;** C01P 2002/52; C01P 2004/51;
C01P 2004/61; C01P 2006/12; C01P 2006/40;
Y02E 60/10

(86) International application number:
**PCT/EP2021/058566**

(87) International publication number:
**WO 2021/204648 (14.10.2021 Gazette 2021/41)**

(54) **PROCESS FOR MAKING A LITHIATED OXIDE**

VERFAHREN ZUR HERSTELLUNG EINES LITHIIERTEN OXIDS

PROCÉDÉ DE FABRICATION D'UN OXYDE LITHIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **08.04.2020  EP 20168658**

(43) Date of publication of application:
**15.02.2023   Bulletin 2023/07**

(73) Proprietors:
• **BASF SE
67056 Ludwigshafen am Rhein (DE)**
• **Karlsruher Institut für Technologie
76131 Karlsruhe (DE)**

(72) Inventors:
• **BIANCHINI, Matteo
67056 Ludwigshafen (DE)**
• **HARTMANN, Pascal
67056 Ludwigshafen (DE)**
• **BREZESINSKI, Torsten
76344 Eggenstein-Leopoldshafen (DE)**

(74) Representative: **BASF IP Association
BASF SE
GBI-C006
67056 Ludwigshafen (DE)**

(56) References cited:
EP-A1- 3 301 076       US-A- 5 599 642
US-A1- 2017 365 859    US-A1- 2018 316 005

• **WELF BRONGER ET AL: "Zur Kenntnis der
Niccolate der Alkalimetalle", ZEITSCHRIFT FUR
ANORGANISCHE UND ALLGEMEINE CHEMIE,
vol. 333, no. 4-6, 1 December 1964 (1964-12-01),
pages 188-200, XP055725095, ISSN: 0044-2313,
DOI: 10.1002/zaac.19643330405**

**Description**

The present invention is directed towards a process for making a lithiated oxide according to the formula $Li_{1+x}TM_{1-x}O_2$ wherein x is in the range of from 0.05 to 0.33 and TM is a combination of elements according to general formula (I)

$$(Ni_aCo_bMn_c)_{1-d}M^1_d \qquad (I)$$

wherein

a is in the range of from 0.98 to 1.0,
b being in the range of from zero to 0.02,
c being in the range of from zero to 0.02, and
d being in the range of from zero to 0.01,
$M^1$ is selected from Al, Ti, Zr, W, Mo, Ga, Nb, Ta, Mg and combinations of at least two of the foregoing,

$$a + b + c = 1,$$

said process comprising the following steps:

(a) making a particulate hydroxide, oxide or oxyhydroxide of nickel, and, optionally, at least one of Co and Mn and $M^1$, by combining an aqueous solution of sodium or potassium hydroxide with an aqueous solution containing a water-soluble salt of nickel and, optionally, a water-soluble salt of Co, Mn, Al, Ti, Zr, W, Mo, Ga, Nb, Ta, or Mg,
(b) adding a source of lithium,
(c) treating the mixture obtained from step (b) thermally at at least two different temperatures:

(c1) at 300 to 500°C under an atmosphere that may comprise oxygen,
(c2) at 500 to 600°C under an atmosphere of oxygen,

wherein the temperature in step (c2) is set to be higher than in step (c1).

Lithiated transition metal oxides are currently being used as electrode active materials for lithium-ion batteries. Extensive research and developmental work have been performed in the past years to improve properties like charge density, specific energy, but also other properties like the reduced cycle life and capacity loss that may adversely affect the lifetime or applicability of a lithium-ion battery. Additional effort has been made to improve manufacturing methods.
In a typical process for making cathode materials for lithium-ion batteries, first a so-called precursor is being formed by co-precipitating the transition metals as carbonates, oxides or preferably as hydroxides that may or may not be basic. The precursor is then mixed with a source of lithium such as, but not limited to, LiOH, $Li_2O$ or $Li_2CO_3$ and calcined (fired) at high temperatures. Lithium salt(s) can be employed as hydrate(s) or in dehydrated form. The calcination - or firing - generally also referred to as thermal treatment or heat treatment of the precursor - is usually carried out at temperatures in the range of from 600 to 1,000 °C. During the thermal treatment, a solid-state reaction takes place, and the electrode active material is formed. The thermal treatment is performed in the heating zone of an oven or kiln.
An ongoing issue remains the problem of capacity fade. Various theories exist about the reason for the capacity fade, and - among others - the surface properties the cathode active materials have been modified, for example by coating with an inorganic oxide or with polymers. All of the suggested solutions leave room for improvement.
A material that appears to be an attractive candidate is $Li_2NiO_3$ and related overlithiated lithium-nickel oxides. W. Bronger *et al.* have published a synthesis that is technically unattractive for up-scaling, Zeitschrift Fur Anorganische Und Allgemeine Chemie 1964, 333, 188, and the same applies to a synthesis disclosed by H. Migeon et al., Revue de Chimie Minerale 1976, 13, 1. US5599642 discloses a process for preparing Li2NiO3 used for a cathode active material for the lithium secondary battery, which comprises steps of mixing 1) a nickel oxide or a nickel salt which produces nickel of more than trivalence when heated and 2) a lithium salt at an Li/Ni (molar salt ratio) of 1.0 to 1.5. The mixture is first preheated at 400°C to 600° and then heated at 680°C to 780°C in an oxygen atmosphere such as in the oxygen stream or under the oxygen pressure. The examples show the application of LiOH and Ni2O3 as precursors.
It was therefore an objective of the present invention to provide a synthesis for making overlithiated lithium-nickel oxides such as, but not limited to $Li_2NiO_3$ and related materials that is readily scalable.
Accordingly, the process defined at the outset has been found, hereinafter also referred to as inventive process or process according to the present invention.

The inventive process comprises the following steps (a) and (b) and (c), hereinafter also referred to as step (a) and step (b) and step (c) or briefly as (a) or (b) or (c), respectively:

The inventive process relates to making a lithiated oxide according to the formula $Li_{1+x}TM_{1-x}O_2$ wherein x is in the range of from 0.05 to 0.33, preferably from 0.2 to 0.33, and TM is a combination of elements according to general formula (I)

$$(Ni_aCo_bMn_c)_{1-d}M^1_d \qquad (I)$$

wherein

a is in the range of from 0.98 to 1.0,
b being in the range of from zero to 0.02,
c being in the range of from zero to 0.02, and
d being in the range of from zero to 0.01,
and a + b + c = 1,
$M^1$ is selected from Al, Ti, Zr, W, Mo, Ga, Nb, Ta, Mg and combinations of at least two of the foregoing, for example Al and Zr or Al and Ti,
said process comprising the following steps:

(a) making a particulate hydroxide, oxide or oxyhydroxide of nickel, and, optionally, at least one of Co and Mn and $M^1$, by combining an aqueous solution of sodium or potassium hydroxide with an aqueous solution containing a water-soluble salt of nickel and, optionally, a water-soluble salt of Co, Mn, Al, Ti, Zr, W, Mo, Ga, Nb, Ta, or Mg,
(b) adding a source of lithium,
(c) treating the mixture obtained from step (b) thermally at at least two different temperatures:

(c1) at 300 to 500°C under an atmosphere that may comprise oxygen,
(c2) at 500 to 600°C under an atmosphere of oxygen,

wherein the temperature in step (c2) is set to be higher than in step (c1).

It will be noted that $Li_{1+x}TM_{1-x}O_2$ with TM = Ni and x = 0.33 corresponds to $Li_{1.33}Ni_{0.67}O_2$ and thus to $Li_2NiO_3$.

Steps (a) to (c) will be described in more detail below.

Step (a) includes combining an aqueous solution of sodium or potassium hydroxide with an aqueous solution containing a water-soluble salt of nickel and, optionally, a water-soluble salt of Co, Mn, Al, Ti, Zr, W, Mo, Ga, Nb, Ta, or Mg.

TM in inventive electrode active material may contain traces of further metal ions, for example traces of ubiquitous metals such as sodium, calcium or zinc, as impurities but such traces will not be taken into account in the description of the present invention. Traces in this context will mean amounts of 0.05 mol-% or less, referring to the total metal content of TM.

In step (a), an aqueous solution of potassium or sodium hydroxide is used, hereinafter also referred to as solution (a). This includes an aqueous solution of sodium and potassium hydroxide. Preferred is an aqueous solution of sodium hydroxide.

Solution ($\alpha$) may contain some amount of carbonate, e.g., by aging of the solution or the respective alkali metal hydroxide.

The pH value of solution ($\alpha$) is preferably 13 or higher, for example 14.5.

In step (a), furthermore an aqueous solution containing a water-soluble salt of Ni, and, if applicable, of at least one of Co, Mn, Al, Ti, Zr, W, Mo, Ga, Nb, Ta, or Mg is used, hereinafter also referred to as solution ($\beta$).

The term water-soluble salts of nickel or of metals other than nickel refers to salts that exhibit a solubility in distilled water at 25°C of 25 g/l or more, the amount of salt being determined under omission of crystal water and of water stemming from aquo complexes. Water-soluble salts of nickel may preferably be the respective water-soluble salts of $Ni^{2+}$. Examples of water-soluble salts of nickel are sulfate, nitrate, acetate and halides, especially chloride. Preferred are nitrate and sulfate, of which the sulfate is more preferred.

In one embodiment of the present invention, the concentration of nickel can be selected within wide ranges. Preferably, the concentration of nickel is selected such that they are within the range of, in total, 1 to 1.8 mol of the Ni/kg of solution, more preferably 1.5 to 1.7 mol of Ni/kg of solution. "The transition metal salts" used herein refers to the water-soluble salts of nickel and, as far as applicable, Co, Mn, Al, Ti, Zr, W, Mo, Ga, Nb, Ta, or Mg.

Solution ($\beta$) may have a pH value in the range of from 2 to 5. In embodiments wherein higher pH values are desired, ammonia may be added to solution ($\beta$). However, it is preferred to not add ammonia to solution ($\beta$).

In step (a), solution ($\alpha$) and solution ($\beta$) are combined, for example by feeding them simultaneously into a vessel, for example a stirred tank reactor.

It is preferred to use ammonia during step (a) but to feed it separately or in solution (α).

In one embodiment of the present invention, the pH value at the end of the step (a) is in the range of from 8 to 12.5, preferably from 10.5 to 12.3, and more preferably from 11.0 to 12.0, each measured in the mother liquor at 23°C.

In one embodiment of the present invention, the (co)precipitation is performed at temperatures in the range from 10 to 85°C, preferably at temperatures in the range from 20 to 60°C.

In one embodiment of the present invention, the (co)precipitation is performed under inert gas, for example a noble gas such as argon, or under $N_2$.

In one embodiment of step (a), a slight excess of potassium or sodium hydroxide is applied, for example 0.1 to 10 mol-%.

In the course of step (a) a slurry is formed whose solid component is TM (oxy)hydroxide, preferably mainly $Ni(OH)_2$. In said (oxy)hydroxide, the oxidation state of Ni is +2.

In one embodiment of step (a), an overflow system is used to continuously withdraw mother liquor from the reaction vessel.

The solids from the resultant slurry may be isolated by solid-liquid-separation methods, for example decantation, filtration, and by the means of a centrifuge, filtration being preferred. A precursor is obtained.

In preferred embodiments, the precursor is dried, for example under air at a temperature in the range of from 100 to 140°C. A particulate hydroxide, oxide or oxyhydroxide of nickel that may contain one of Co and Mn and $M^1$ is obtained, hereinafter also referred to as precursor.

In one embodiment of the present invention, the precursor is in particulate form. In one embodiment of the present invention, the mean particle diameter (D50) of the precursor is in the range of from 6 to 15 μm, preferably from 7 to 12 μm. The mean particle diameter (D50) in the context of the present invention refers to the median of the volume-based particle diameter, as can be determined, for example, by light scattering.

In one embodiment of the present invention, the particle shape of the secondary particles of the precursor is spheroidal, that are particles that have a spherical shape. Spherical spheroidal shall include not just those which are exactly spherical but also those particles in which the maximum and minimum diameter of at least 90% (number average) of a representative sample differ by not more than 10%.

In one embodiment of the present invention the specific surface area (BET) of the precursor is in the range of from 2 to 10 $m^2/g$, determined by nitrogen adsorption, for example in accordance with to DIN-ISO 9277:2003-05.

In one embodiment of the present invention, the precursor may have a particle diameter distribution span in the range of from 0.5 to 0.9, the span being defined as [(D90) - (D10)] divided by (D50), all being determined by LASER analysis. In another embodiment of the present invention, the precursor may have a particle diameter distribution span in the range of from 1.1 to 1.8.

In step (b), the resultant precursor is mixed with a source of lithium.

Examples of sources of lithium are $Li_2O$, $LiNO_3$, LiOH, $Li_2O_2$, $Li_2CO_3$, each water-free or as hydrate, if applicable, for example $LiOH \cdot H_2O$. Preferred are LiOH, $Li_2O$, and $Li_2O_2$. More preferred source of lithium is lithium hydroxide.

Source of lithium is preferable in particulate form, for example with an average diameter (D50) in the range of from 3 to 10 μm, preferably from 5 to 9 μm.

Examples of suitable apparatuses for performing step (b) are high-shear mixers, tumbler mixers, plough-share mixers and free fall mixers. On laboratory scale, mortars with pestles are feasible as well.

Although it is possible to add a source of lithium to a wet filter cake resulting from a step (a) performed without drying operations, it is preferred to perform step (b) as a mixing of two powders, that is the source of lithium and the precursor.

In one embodiment of the present invention, step (b) is performed at a temperature in the range of from ambient temperature to 200°C, preferably from 20 to 50°C.

In one embodiment of the present invention, step (b) has a duration of 10 minutes to 2 hours. Depending on whether additional mixing is performed in step (c) or not, thorough mixing has to be accomplished in step (b).

Although it is possible to add an organic solvent, for example glycerol or glycol, or water in step (b) it is preferred to perform step (b) in the dry state, that is without addition of water or of an organic solvent.

A mixture is obtained.

Step (c) includes subjecting the mixture from step (b) to thermal treatment at at least two different temperatures:

(c1) at 300 to 500°C under an atmosphere that may comprise oxygen, and
(c2) at 500 to 600°C under an atmosphere of oxygen,

wherein the temperature in step (c2) is set to be higher than in step (c1). That means that in embodiments wherein step (c1) is performed at 500°C, step (c2) is performed at a temperature higher than 500°C, for example 520 to 600°C. In embodiments wherein step (c2) is performed at 500°C, step (c1) is performed at a temperature lower than 500°C, for example 300 to 480°C.

In a preferred embodiment of the present invention, step (c1) is performed at a temperature in the range of from 300 to 400°C and step (c2) is performed at a temperature in the range of from 500 to 600°C.

The atmosphere of oxygen in step (c2) may be pure oxygen or oxygen diluted with low amounts of a non-oxidizing gas, for example up to 5 vol-% of nitrogen or argon, determined at normal conditions.

The atmosphere in step (c1) may be oxidizing, for example air or mixtures of air and a non-oxidizing gas such as nitrogen or argon. It is preferred that the atmosphere in step (c1) is oxidizing. Even more preferably, the atmosphere in step (c1) is pure oxygen.

Although steps (c1) and (c2) may be performed in different vessels it is preferred to perform them in the same and to change the temperature and preferably the atmosphere when transitioning from step (c1) to (c2).

In one embodiment of the present invention, step (c) is performed in a roller hearth kiln, a pusher kiln or a rotary kiln or a combination of at least two of the foregoing. Rotary kilns have the advantage of a very good homogenization of the material made therein. In roller hearth kilns and in pusher kilns, different reaction conditions with respect to different steps may be set quite easily. In lab scale trials, box-type and tubular furnaces and split tube furnaces are feasible as well.

In one embodiment of the present invention, step (c) of the present invention is performed under a forced flow of gas, for example air, oxygen or oxygen-enriched air. Such stream of gas may be termed a forced gas flow. Such stream of gas may have a specific flow rate in the range of from 0.5 to 15 $m^3/h \cdot kg$ material according to general formula $Li_{1+x}TM_{1-x}O_2$. The volume is determined under normal conditions: 298 Kelvin and 1 atmosphere. Said forced flow of gas is useful for removal of gaseous cleavage products such as water.

In one embodiment of the present invention, step (c) has a duration in the range of from two to 30 hours. Preferred are 10 to 24 hours. The cooling time is neglected in this context.

After thermal treatment in accordance to step (c), the electrode active material so obtained is cooled down before further processing. Additional - optional steps before further processing the resultant electrode active materials are sieving and de-agglomeration steps.

Preferably, the electrode active materials so obtained have a specific surface area (BET) in the range of from 0.1 to 0.8 $m^2/g$, determined according to DIN-ISO 9277:2003-05.

Preferably, electrode active materials so obtained do not show measurable amounts of free $Li_2O$, for example in XRD diagrams.

By performing the inventive process electrode active materials with excellent properties are available through a straightforward process. They may stabilize their performance upon multiple cycling by developing an electrochemically active rock-salt structure.

The invention is further illustrated by working examples.

I. Precipitation of nickel hydroxide (precursor), step (a.1):
Precipitation of nickel hydroxide was performed at 55°C under a nitrogen atmosphere using a continuously stirred tank reactor with a volume of 2.3 l. Aqueous solutions of nickel sulfate, ammonia and sodium hydroxide were fed into the reactor. The individual flow rates were adjusted to ensure a pH value of 12.6 (plus/minus 0.2), a molar ratio of nickel to ammonia of 0.8 and a residence time of around 8 hours. The solid so obtained was removed by filtration, washed with deionized water for 12 hours and dried at 120 °C for 16 hours. Nickel hydroxide powder was obtained ($Ni(OH)_2$. The average particle diameter (D50) was 10 $\mu$m.

II. Mixing steps
II.1 Step (b.1):
$Ni(OH)_2$ from step (a.1) and $LiOH \cdot H_2O$ were mixed in an amount corresponding to x = 0.1. A mixture was obtained.
II.2 Step (b.2)
The protocol of step (b.1) was followed but with amounts of $Ni(OH)_2$ from step (a.1) and $LiOH \cdot H_2O$ corresponding to x = 0.2.
II.3 Step (b.3)
The protocol of step (b.1) was followed but with amounts of $Ni(OH)_2$ from step (a.1) and $LiOH \cdot H_2O$ corresponding to x = 0.33.
II.4 Step c-(b.4):
The protocol of step (b.1) was followed but with amounts of $Ni(OH)_2$ from step (a.1) and $LiOH \cdot H_2O$ corresponding to x = 0.
III. Calcination
111.1 Manufacture of CAM.1, step (c.1)
Step (c1.1): The mixture from step (b.1) was heated in air at 300 °C for 12 hours.
Step (c2.1): The resulting mixture was recovered and then calcined under $O_2$ flow at 550 °C for 12 hours. The heating and cooling rates were set to 3 °C/min. CAM.1 was obtained as a powder, sieved and stored under Ar atmosphere.
III.2 Manufacture of CAM.2, step (c.2)

Step (c1.2): The mixture from step (b.2) was heated in air at 300 °C for 12 hours.

Step (c2.2): The resulting mixture was recovered and then calcined under $O_2$ flow at 550 °C for 12 hours. The heating and cooling rates were set to 3 °C/min. CAM.2 was obtained as a powder, sieved and stored under Ar atmosphere.

III.3 Manufacture of CAM.3, step (c.3)

Step (c1.3): The mixture from step (b.3) was heated in air at 300 °C for 12 hours.

Step (c2.3): The resulting mixture was recovered and then calcined under $O_2$ flow at 550 °C for 12 hours. The resultant sample was cooled to ambient temperature and then heated again to 550° for 12 hours to reduce possible $Li_2O$ impurities. The heating and cooling rates were set to 3 °C/min. CAM.3 was obtained as a powder, sieved and stored under Ar atmosphere.

III.4 Manufacture of C-CAM.4, Step C-(c.4)

Step C-(c1.4): The mixture from step C-(b.4) was heated in air at 300 °C for 12 hours.

Step C-(c2.4): The resulting mixture was recovered and then calcined under $O_2$ flow at 550 °C for 12 hours. The heating and cooling rates were set to 3 °C/min. C-CAM.4 was obtained as a powder, sieved and stored under Ar atmosphere.

III.5 Manufacture of C-CAM.5, Step C-(c.5)

Step (c1.3): The mixture from step (b.3) was heated in air at 300 °C for 12 hours.

Step C-(c2.5): The resulting mixture was recovered and then calcined under $O_2$ flow at 610 °C for 12 hours. The heating and cooling rates were set to 3 °C/min. C-CAM.5 was obtained as a powder, sieved and stored under Ar atmosphere.

IV. Testing

IV.1 Electrode manufacture, general procedure

Positive electrode: PVDF binder (Solef® 5130) was dissolved in NMP (Merck) to produce a 7.5 wt.% solution. For electrode preparation, binder solution (10 wt.%) and carbon black (Super C65, 10 wt.-%) were suspended in NMP. After mixing using a planetary centrifugal mixer (ARE-250, Thinky Corp.; Japan), inventive CAM (or comparative CAM) (80 wt.%) was added and the suspension was mixed again to obtain a lump-free slurry. The solids content of the slurry was adjusted to 59%. The slurry was coated onto Al foil using a KTF-S roll-to-roll coater (Mathis AG). Prior to use, all electrodes were calendared. The thickness of cathode material was 100 $\mu$m, corresponding to 4 mg/cm². All electrodes were dried at 105°C for 7 hours before battery assembly.

IV.2 Electrolyte Manufacture

A base electrolyte composition was prepared containing 1 M $LiPF_6$ in 3:7 by weight ethylene carbonate and ethyl methyl carbonate (EL base 1).

IV.3 Test cell Manufacture

Coin-type half cells (20 mm in diameter and 3.2 mm in thickness) comprising a cathode prepared as described under II.1 and lithium metal as working and counter electrode, respectively, were assembled and sealed in an Ar-filled glove box. In addition, the cathode and anode and a separator were superposed in order of cathode // separator // Li foil to produce a half coin cell. Thereafter, 0.1 ml of the EL base 1 which is described above (II.2) were introduced into the coin cell.

IV.4 Evaluation of cell performance

Evaluation of coin half-cell performance

Cell performance was evaluated using the produced coin type battery. For the battery performances, initial capacity and reaction resistance of cell were measured.

Cycling data were recorded at 25 °C using a *MACCOR Inc.* battery cycler Cells were gal-vanostatically charged to 4.8 V vs Li⁺/Li, and discharged to 2.0 V vs Li⁺/Li at a rate of C/25 (1C = 225 mA/$g_{CAM}$).

The results are summarized in Table 1.

Table 1: Properties and electrochemical results of inventive and comparative materials

| CAM | x | ICP (Li/Ni ratio) | Unit cell volume ($\text{Å}^3$) and space group | 1st charge capacity (mAh/g) | 1st discharge capacity (mA·h/g) |
|---|---|---|---|---|---|
| CAM.1 | 0.1 | 1.24(2) | 100.5 (R-3m) | n.d. | n.d. |
| CAM.2 | 0.2 | 1.51(2) | 198.1 (C2/m) | n.d. | n.d. |
| CAM.3 | 0.33 | 1.9(3) | 195.4 (C2/m) | 297 | 207 |
| C-CAM.4 | 0 | 1.04(2) | 101.5 (R-3m) | 238 | 173 |

**Claims**

1. Process for making a lithiated oxide according to the formula $Li_{1+x}TM_{1-x}O_2$ wherein x is in the range of from 0.05 to 0.33 and TM is a combination of elements according to general formula (I)

$$(Ni_aCo_bMn_c)_{1-d}M^1_d \qquad (I)$$

wherein

a is in the range of from 0.98 to 1.0,
b being in the range of from zero to 0.02,
c being in the range of from zero to 0.02, and
d being in the range of from zero to 0.01,
$M^1$ is selected from Al, Ti, Zr, W, Mo, Ga, Nb, Ta, Mg and combinations of at least two of the foregoing,

$$a + b + c = 1,$$

said process comprising the following steps:

(a) making a particulate hydroxide, oxide or oxyhydroxide of nickel, and, optionally, at least one of Co and Mn and $M^1$, by combining an aqueous solution of sodium or potassium hydroxide with an aqueous solution containing a water-soluble salt of nickel and, optionally, a water-soluble salt of Co, Mn, Al, Ti, Zr, W, Mo, Ga, Nb, Ta, or Mg,
(b) adding a source of lithium,
(c) treating the mixture obtained from step (b) thermally at at least two different temperatures:

(c1) at 300 to 500°C under an atmosphere that may comprise oxygen,
(c2) at 500 to 600°C under an atmosphere of oxygen,
wherein the temperature in step (c2) is set to be higher than in step (c1).

2. Process according to claim 1 wherein the variable a is 1.0.

3. Process according to any of the preceding claims wherein step (c) is performed under a forced flow of gas.

4. Process according to any of the preceding claims wherein step (c) is performed in a roller hearth kiln, a pusher kiln or a rotary hearth kiln.

5. Process according to any of the preceding claims wherein step (c1) is performed under an atmosphere of argon or nitrogen.

6. Process according to any of the preceding claims wherein the source of lithium is selected from LiOH, $Li_2O$, and $Li_2O_2$.

7. Process according to any of the preceding claims wherein step (c2) is performed twice.

8. Process according to any of the preceding claims wherein step (c1) is performed at a temperature in the range of from 300 to 400°C.

9. Process according to any of the preceding claims wherein step (c) is performed at normal pressure.

10. Process according to any of the preceding claims wherein step (b) is performed as a mixing of two powders.

**Patentansprüche**

1. Verfahren zur Herstellung eines lithiierten Oxids gemäß der Formel $Li_{1+x}TM_{1-x}O_2$, wobei x im Bereich von 0,05 bis 0,33 liegt und es sich bei TM um eine Kombination von Elementen gemäß der allgemeinen Formel (I)

$$(Ni_aCo_bMn_c)_{1-d}M^1_d \qquad (I)$$

handelt, wobei

a im Bereich von 0,98 bis 1,0 liegt,
b im Bereich von null bis 0,02 liegt,
c im Bereich von null bis 0,02 liegt und
d im Bereich von null bis 0,01 liegt,
$M^1$ aus Al, Ti, Zr, W, Mo, Ga, Nb, Ta, Mg und Kombinationen von mindestens zwei davon ausgewählt ist,

$$a + b + c = 1,$$

wobei das Verfahren die folgenden Schritte umfasst:

(a) Herstellen eines teilchenförmigem Hydroxids, Oxids oder Oxidhydroxids von Nickel und gegebenenfalls mindestens einem von Co und Mn und $M^1$ durch Vereinigen einer wässrigen Lösung von Natrium- oder Kaliumhydroxid mit einer wässrigen Lösung, die ein wasserlösliches Salz von Nickel und gegebenenfalls ein wasserlösliches Salz von Co, Mn, Al, Ti, Zr, W, Mo, Ga, Nb, Ta oder Mg enthält,
(b) Zugeben einer Lithiumquelle,
(c) thermisches Behandeln der aus Schritt (b) erhaltenen Mischung bei mindestens zwei verschiedenen Temperaturen:

(c1) bei 300 bis 500 °C unter einer Atmosphäre, die Sauerstoff enthalten kann,
(c2) bei 500 bis 600 °C unter Sauerstoffatmosphäre, wobei die Temperatur in Schritt (c2) so eingestellt wird, dass sie höher als in Schritt (c1) ist.

2. Verfahren nach Anspruch 1, wobei die Variable a gleich 1,0 ist.

3. Verfahren nach einem der vorstehenden Ansprüche, wobei Schritt (c) unter einem erzwungenen Gasstrom durchgeführt wird.

4. Verfahren nach einem der vorhergehenden Ansprüche, wobei Schritt (c) in einem Rollenherdofen, einem Durchschiebeofen oder einem Drehherdofen durchgeführt wird.

5. Verfahren nach einem der vorhergehenden Ansprüche, wobei Schritt (c1) unter Argon- oder Stickstoffatmosphäre durchgeführt wird.

6. Verfahren nach einem der vorhergehenden Ansprüche, wobei die Lithiumquelle aus LiOH, $Li_2O$ und $Li_2O_2$ ausgewählt wird.

7. Verfahren nach einem der vorstehenden Ansprüche, wobei Schritt (c2) zweimal durchgeführt wird.

8. Verfahren nach einem der vorstehenden Ansprüche, wobei Schritt (c1) bei einer Temperatur im Bereich von 300 bis 400 °C durchgeführt wird.

**9.** Verfahren nach einem der vorstehenden Ansprüche, wobei Schritt (c) bei Normaldruck durchgeführt wird.

**10.** Verfahren nach einem der vorstehenden Ansprüche, wobei Schritt (b) als Mischen von zwei Pulvern durchgeführt wird.

**Revendications**

**1.** Procédé pour la préparation d'un oxyde lithié selon la formule $Li_{1+x}TM_{1-x}O_2$ x étant dans la plage allant de 0,05 à 0,33 et TM étant une combinaison d'éléments selon la formule générale (I)

$$(Ni_aCo_bMn_c)_{1-d}M^1_d \qquad (I)$$

o étant dans la plage de 0,98 à 1,0 ;
b étant dans la plage allant de zéro à 0,02,
c étant dans la plage allant de zéro à 0,02 et
d étant dans la plage allant de zéro à 0,01,
$M^1$ étant choisi parmi Al, Ti, Zr, W, Mo, Ga, Nb, Ta, Mg et des combinaisons d'au moins deux des éléments précédents,

$$a + b + c = 1,$$

ledit procédé comprenant les étapes suivantes :

(a) préparation d'un hydroxyde, d'un oxyde ou d'un oxyhydroxyde particulaire de nickel, et, éventuellement, d'au moins l'un parmi Co et Mn et $M^1$, en combinant une solution aqueuse d'hydroxyde de sodium ou de potassium avec une solution aqueuse contenant un sel soluble dans l'eau de nickel et, éventuellement, un sel soluble dans l'eau de Co, Mn, Al, Ti, Zr, W, Mo, Ga, Nb, Ta ou Mg,
(b) ajout d'une source de lithium,
(c) traitement du mélange obtenu de l'étape (b) thermiquement à au moins deux températures différentes :

(c1) à une température de 300 à 500 °C sous une atmosphère qui peut comprendre de l'oxygène,
(c2) à une température de 500 à 600 °C sous une atmosphère d'oxygène,
la température dans l'étape (c2) étant ajustée pour être supérieure à celle dans l'étape (c1).

**2.** Procédé selon la revendication 1, la variable a étant 1,0.

**3.** Procédé selon l'une quelconque des revendications précédentes, l'étape (c) étant réalisée sous un écoulement forcé de gaz.

**4.** Procédé selon l'une quelconque des revendications précédentes, l'étape (c) étant réalisée dans un four à soles à rouleau, un four poussant ou un four à soles rotatif.

**5.** Procédé selon l'une quelconque des revendications précédentes, l'étape (c1) étant réalisée sous une atmosphère d'argon ou d'azote.

**6.** Procédé selon l'une quelconque des revendications précédentes, la source de lithium étant choisie parmi LiOH, $Li_2O$ et $L1_2O_2$.

**7.** Procédé selon l'une quelconque des revendications précédentes, l'étape (c2) étant réalisée deux fois.

**8.** Procédé selon l'une quelconque des revendications précédentes, l'étape (c1) étant réalisée à une température dans la plage allant de 300 à 400 °C.

**9.** Procédé selon l'une quelconque des revendications précédentes, l'étape (c) étant réalisée à pression normale.

**10.** Procédé selon l'une quelconque des revendications précédentes, l'étape (b) étant réalisée comme mélange de

deux poudres.

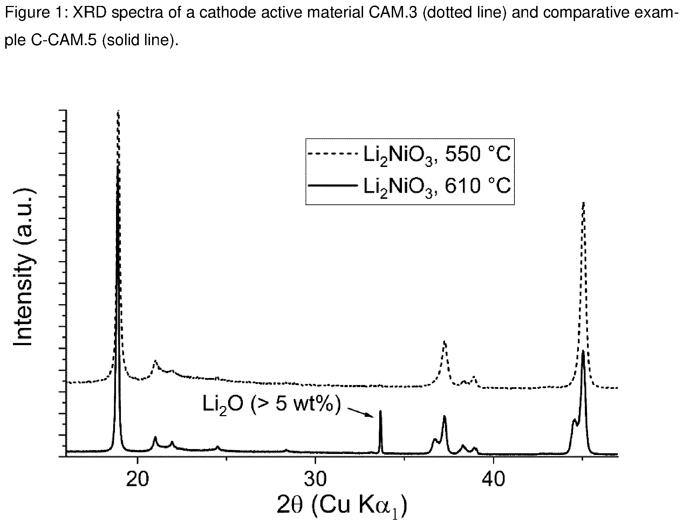

Figure 1: XRD spectra of a cathode active material CAM.3 (dotted line) and comparative example C-CAM.5 (solid line).

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5599642 A

**Non-patent literature cited in the description**

- *Zeitschrift Fur Anorganische Und Allgemeine Chemie,* 1964, vol. 333, 188

- **H. MIGEON et al.** *Revue de Chimie Minerale,* 1976, vol. 13 (1